# EUROPEAN PATENT APPLICATION

(11) **EP 4 813 788 A1**
(43) Date of publication of application: **30.09.2026**
(21) Application number: 25213655.1
(22) Date of filing: 05.11.2025
(51) Int. Cl.: B60W 50/10, B60W 60/00, B60W 40/09

(54) **VEHICLE AND METHOD FOR CONTROLLING THE SAME**

(30) Priority: 28.03.2025 KR 20250040454
(71) Applicant: Hyundai Motor Company, Seoul 06797 (KR); Kia Corporation, Seoul 06797 (KR)
(72) Inventor: CHOI, Ji Am, 18280 Hwaseong-si, Gyeonggi-do (KR); LEE, Jin Ug, 18280 Hwaseong-si, Gyeonggi-do (KR); JEONG, Jin Su, 18280 Hwaseong-si, Gyeonggi-do (KR); PARK, Se Young, 18280 Hwaseong-si, Gyeonggi-do (KR)
(74) Representative: Viering, Jentschura & Partner mbB Patent- und Rechtsanwälte

(57) **Abstract**

An autonomous vehicle and a method for controlling the same are disclosed. An autonomous vehicle may determine, based on driving data of a driver of the autonomous vehicle, an autonomous driving override threshold value for the driver. The driving data may be processed through a learning process associated with autonomous overriding operations performed by the driver. The autonomous vehicle may, during driving control by an autonomous driving system of the autonomous vehicle, disengage, based on a value indicating a degree of driver intervention associated with the driver and the autonomous driving override threshold value, the autonomous driving system of the autonomous vehicle.

## Description

### CROSS-REFERENCE TO RELATED APPLICATION

This application claims the benefit of and priority to Korean Patent Application No. 10-2025-0040454, filed in the Korean Intellectual Property Office on March 28, 2025, the disclosure of which is incorporated herein by reference in its entirety.

### FIELD OF TECHNOLOGY

The present disclosure relates to an autonomous vehicle and a method for controlling the same.

### BACKGROUND

Some implementations of the autonomous driving system have a problem in that it may fail to sufficiently reflect an individual driver's braking and steering characteristics because a uniform standard is applied to determine the driver's intervention (e.g., driver override). This may result in a shortened duration (e.g., premature disengagement) of autonomous driving and negatively affect the driving experience of the driver.

### SUMMARY

The present disclosure has been made to solve the aforementioned problem, and is directed to setting a personalized override determination reference value that reflects an individual driver's braking and steering characteristics.

Problems to be solved by the present disclosure are not limited to those mentioned above, and other problems not mentioned will be clearly understood by those of ordinary skill in the art from the following description.

According to one or more example embodiments of the present disclosure, an autonomous vehicle may include: a processor; and a memory storing at least one instruction that is configured, when executed by the processor communicating with the memory, to cause the autonomous vehicle to: determine, based on driving data of a driver of the autonomous vehicle, an autonomous driving override threshold value for the driver; and, during driving control by an autonomous driving system of the autonomous vehicle, disengage, based on a value indicating a degree of driver intervention associated with the driver and the autonomous driving override threshold value, the autonomous driving system of the autonomous vehicle. The driving data may be processed through a learning process associated with autonomous overriding operations performed by the driver.

The at least one instruction may be configured, when executed by the processor communicating with the memory, to cause the autonomous vehicle to determine the autonomous driving override threshold value by: outputting, via an input and output device of the autonomous vehicle, a user interface for turning on or off a user-specific mode (USM) for personalizing the autonomous driving override threshold value; and performing, based on the USM being turned on, the learning process by inputting accumulated driving data associated with the driver as input to a machine-learning model; automatically adjusting, based on the USM being turned on and the learning process, the autonomous driving override threshold value for the driver.

The at least one instruction may be configured, when executed by the processor communicating with the memory, to cause the autonomous vehicle to determine the autonomous driving override threshold value by: outputting, via an input and output device of the autonomous vehicle, a user interface for turning on or off a user-specific mode (USM) for personalizing the autonomous driving override threshold value; and receiving, based on the USM being turned off and via the user interface, a manual setting of the autonomous driving override threshold value.

The at least one instruction may be configured, when executed by the processor communicating with the memory, to cause the autonomous vehicle to determine the autonomous driving override threshold value by: classifying, based on the learning process, an override tendency of the driver; and determine the autonomous driving override threshold value of the driver further based on the classified override tendency.

The at least one instruction may be configured, when executed by the processor communicating with the memory, to cause the autonomous vehicle to determine the autonomous driving override threshold value by: setting, at a first time when an amount of the driving data of the driver is below a predetermined threshold, the autonomous driving override threshold value of the driver to a preset default value; and automatically updating, at a second time after the first time, the autonomous driving override threshold value based on the driving data. The driving data may include accumulated driving data accumulated after setting the preset default value.

The at least one instruction may be configured, when executed by the processor communicating with the memory, to further cause the autonomous vehicle to: include, based on a braking input of the driver exceeding a threshold braking value, the braking input of the driver in the learning process for processing the driving data of the driver. The threshold braking value may be set by the autonomous driving system.

The at least one instruction may be configured, when executed by the processor communicating with the memory, to further cause the autonomous vehicle to: identify the braking input of the driver that exceeds the threshold braking value; and determine the autonomous driving override threshold value of the driver based on the identified braking input.

The at least one instruction may be configured, when executed by the processor communicating with the memory, to further cause the autonomous vehicle to: exclude, based on at least one of an intensity of a braking input of the driver or surrounding situation information acquired via a sensor of the autonomous vehicle, the braking input of the driver from the learning process.

The at least one instruction may be configured, when executed by the processor communicating with the memory, to further cause the autonomous vehicle to: include, based on a steering input of the driver exceeding a threshold steering value, the steering input in the learning process for processing the driving data of the driver.

The at least one instruction may be configured, when executed by the processor communicating with the memory, to further cause the autonomous vehicle to identify the steering input of the driver that exceeds the threshold steering value. The threshold steering value may be set by the autonomous driving system. The at least one instruction may be configured, when executed by the processor communicating with the memory, to further cause the autonomous vehicle to determine the autonomous driving override threshold value of the driver based on the identified steering input.

According to one or more example embodiments of the present disclosure, a method performed by a device of an autonomous vehicle may include: determining, based on driving data of a driver of the autonomous vehicle, an autonomous driving override threshold value for the driver; and, during driving control by an autonomous driving system of the autonomous vehicle, disengaging, based on a value indicating a degree of driver intervention associated with the driver and the autonomous driving override threshold value, the autonomous driving system of the autonomous vehicle. The driving data may be processed through a learning process associated with autonomous overriding operations performed by the driver.

Determining the autonomous driving override threshold value may include: outputting, via an input and output device of the autonomous vehicle, a user interface for turning on or off a user-specific mode (USM) for personalizing the autonomous driving override threshold value; performing, based on the USM being turned on, the learning process by inputting accumulated driving data associated with the driver as input to a machine-learning model; and automatically adjusting, based on the USM being turned on and based on the learning process, the autonomous driving override threshold value for the driver.

Determining the autonomous driving override threshold value may include: outputting, via an input and output device of the autonomous vehicle, a user interface for turning on or off a user-specific mode (USM) for personalizing the autonomous driving override threshold value; and receiving, based on the USM being turned off and via the user interface, a manual setting of the autonomous driving override threshold value.

Determining the autonomous driving override threshold value may include: classifying, based on the learning process, an override tendency of the driver by machine-learning the driving data of the driver; and determining the autonomous driving override threshold value of the driver further based on the classified override tendency.

Determining the autonomous driving override threshold value may include: setting, at a first time when an amount of the driving data of the driver is below a predetermined threshold, the autonomous driving override threshold value of the driver to a preset default value; and automatically updating, at a second time after the first time, the autonomous driving override threshold value based on the driving data. The driving data may include accumulated driving data accumulated after setting the preset default value.

The method may further include: including, based on a braking input of the driver exceeding a threshold braking value, the braking input of the driver in the learning process for processing the driving data of the driver. The threshold braking value may be set by the autonomous driving system.

The method may further include: identifying the braking input of the driver that exceeds the threshold braking value; and determining the autonomous driving override threshold value of the driver based on the identified braking input.

The method may further include: excluding, based on at least one of an intensity of a braking input of the driver or surrounding situation information acquired via a sensor of the autonomous vehicle, the braking input of the driver from the learning process.

The method may further include: including a, based on a steering input of the driver exceeding a threshold steering value, the steering input in the learning process for processing the driving data of the driver.

The method may further include identifying the steering input of the driver that exceeds the threshold steering value. The threshold steering value may be set by the autonomous driving system. The method may further include determining the autonomous driving override threshold value of the driver based on the identified steering input.

### BRIEF DESCRIPTION OF THE DRAWINGS

The above and other objects, features and advantages of the present disclosure will become more apparent to those of ordinary skill in the art by describing one or more example embodiments thereof in detail with reference to the accompanying drawings, in which:
FIG. 1 is a block diagram illustrating an example autonomous vehicle;
FIG. 2 is a flowchart illustrating an example process of personalized override learning and determination;
FIG. 3 is a flowchart illustrating an example process of override determination;
FIG. 4 is a flowchart illustrating an example process for a personalized automatic setting of a user-specific mode (USM);
FIGS. 5 and 6 are diagrams illustrating example user interface (HMI) screens; and
FIG. 7 shows an example computing system.

### DETAILED DESCRIPTION

Hereinafter, one or more example embodiments of the present disclosure will be described in detail with reference to the accompanying drawings.

However, the technical idea of the present disclosure is not limited to the example embodiment(s) as described herein but may be implemented in various different forms, and within the scope of the technical idea of the present disclosure, one or more among components in the example embodiment(s) may be used by being selectively combined and substituted.

Further, unless specifically defined and described, terms used in the example embodiment(s) of the present disclosure (including technical and scientific terms) may be interpreted as meanings which are generally understood by those skilled in the art to which the present disclosure pertains, and commonly used terms such as terms defined in the dictionary may be interpreted in consideration of the contextual meaning of the related art.

The terms used in the example embodiment(s) of the present disclosure are for the purpose of describing the example embodiment(s) only and are not intended to limit the disclosure.

In the present specification, the singular forms may include the plural forms unless the context clearly dictates otherwise. For purposes of this application and the claims, using the exemplary phrase "at least one of: A; B; or C" or "at least one of A, B, or C," the phrase means "at least one A, or at least one B, or at least one C, or any combination of at least one A, at least one B, and at least one C. Further, exemplary phrases, such as "A, B, or C", "at least one of A, B, and C", "at least one of A, B, or C", etc. as used herein may mean each listed item or all possible combinations of the listed items. For example, "at least one of A or B" may refer to (1) at least one A; (2) at least one B; or (3) at least one A and at least one B.

In addition, in describing a component of example embodiment(s) of the present disclosure, terms such as first, second, A, B, (a), (b), etc., may be used.

These terms are only for distinguishing the component from other components, and the essence, sequence, or order of the component is not limited by the terms.

In addition, when a component is described as being "linked," "coupled," or "connected" to another component, the component is not only directly linked, coupled, or connected to another component, but also "linked," "coupled," or "connected" to another component with still another component disposed between the component and the other component.

Further, when a component is described as being formed or disposed "on (above) or under (below)" of another component, the term "on (above) or under (below)" includes not only when two components are in direct contact with each other, but also when one or more of other components are formed or disposed between the two components. Further, when a component is described as being "on (above) or below (under)," the description may include the meanings of an upward direction and a downward direction based on one component.

The term "autonomous driving system" or "driver control assistance system" as used in this document refers to hardware and software capable of assisting the driver in continuously controlling the longitudinal and lateral movements of the vehicle. This driver control assistance system may be referred to as the "system" in this document.

The term "feature" as used in this document may refer to a specific function of the system that provides assistance to the driver under defined traffic scenarios, conditions, and system boundaries.

The term "dynamic control" as used in this document may refer to the real-time performance of operational and tactical functions required to move the vehicle. This may include control of the vehicle's lateral and longitudinal movements, monitoring of the road environment, response to events in the road traffic environment, operational planning, and signal delivery.

The term "system boundaries" as used in this document may refer to verifiable or measurable limits or conditions set by the manufacturer, up to or within the range of the conditions that affect the ability of the system or its features to operate as intended and to provide assistance to the driver.

The term "override" as used in this document may refer to an intentional input by the driver to take control of the vehicle during activation of the autonomous driving system. In the present disclosure, longitudinal override may refer to override through a braking input by the driver (e.g., brake pedal), and lateral override may refer to override through a steering input by the driver (e.g., steering wheel operation).

An automation level of an autonomous driving vehicle may be classified as follows, according to the American Society of Automotive Engineers (SAE). At autonomous driving level 0, the SAE classification standard may correspond to "no automation," in which an autonomous driving system is temporarily involved in emergency situations (e.g., automatic emergency braking) and/or provides warnings only (e.g., blind spot warning, lane departure warning, etc.), and a driver is expected to operate the vehicle. At autonomous driving level 1, the SAE classification standard may correspond to "driver assistance," in which the system performs some driving functions (e.g., steering, acceleration, brake, lane centering, adaptive cruise control, etc.) while the driver operates the vehicle in a normal operation section, and the driver is expected to determine an operation state and/or timing of the system, perform other driving functions, and cope with (e.g., resolve) emergency situations. At autonomous driving level 2, the SAE classification standard may correspond to "partial automation," in which the system performs steering, acceleration, and/or braking under the supervision of the driver, and the driver is expected to determine an operation state and/or timing of the system, perform other driving functions, and cope with (e.g., resolve) emergency situations. At autonomous driving level 3, the SAE classification standard may correspond to "conditional automation," in which the system drives the vehicle (e.g., performs driving functions such as steering, acceleration, and/or braking) under limited conditions but transfer driving control to the driver when the required conditions are not met, and the driver is expected to determine an operation state and/or timing of the system, and take over control in emergency situations but do not otherwise operate the vehicle (e.g., steer, accelerate, and/or brake). At autonomous driving level 4, the SAE classification standard may correspond to "high automation," in which the system performs all driving functions, and the driver is expected to take control of the vehicle only in emergency situations. At autonomous driving level 5, the SAE classification standard may correspond to "full automation," in which the system performs full driving functions without any aid from the driver including in emergency situations, and the driver is not expected to perform any driving functions other than determining the operating state of the system. Although the present disclosure may apply the SAE classification standard for autonomous driving classification, other classification methods and/or algorithms may be used in one or more configurations described herein. One or more features associated with autonomous driving control may be activated based on configured autonomous driving control setting(s) (e.g., based on at least one of: an autonomous driving classification, a selection of an autonomous driving level for a vehicle, etc.).

Based on one or more features (e.g., evaluating the engagement state of the driver) described herein, an operation of the vehicle may be controlled. The vehicle control may include various operational controls associated with the vehicle (e.g., autonomous driving control, sensor control, braking control, braking time control, acceleration control, acceleration change rate control, alarm timing control, forward collision warning time control, etc.).

One or more auxiliary devices (e.g., engine brake, exhaust brake, hydraulic retarder, electric retarder, regenerative brake, etc.) may also be controlled, for example, based on one or more features (e.g., evaluating the engagement state of the driver) described herein. One or more communication devices (e.g., a modem, a network adapter, a radio transceiver, an antenna, etc., that is capable of communicating via one or more wired or wireless communication protocols, such as Ethernet, Wi-Fi, near-field communication (NFC), Bluetooth, Long-Term Evolution (LTE), 5G New Radio (NR), vehicle-to-everything (V2X), etc.) may also be controlled, for example, based on one or more features (e.g., evaluating the engagement state of the driver) described herein.

Minimum risk maneuver (MRM) operation(s) may also be controlled, for example, based on one or more features (e.g., evaluating the engagement state of the driver) described herein. A minimal risk maneuvering operation (e.g., a minimal risk maneuver, a minimum risk maneuver) may be a maneuvering operation of a vehicle to minimize (e.g., reduce) a risk of collision with surrounding vehicles in order to reach a lowered (e.g., minimum) risk state. A minimal risk maneuver may be an operation that may be activated during autonomous driving of the vehicle when a driver is unable to respond to a request to intervene. During the minimal risk maneuver, one or more processors of the vehicle may control a driving operation of the vehicle for a set period of time.

Biased driving operation(s) may also be controlled, for example, based on one or more features (e.g., evaluating the engagement state of the driver) described herein. A driving control apparatus may perform a biased driving control. To perform a biased driving, the driving control apparatus may control the vehicle to drive in a lane by maintaining a lateral distance between the position of the center of the vehicle and the center of the lane. For example, the driving control apparatus may control the vehicle to stay in the lane but not in the center of the lane.

The driving control apparatus may identify a biased target lateral distance for biased driving control. For example, a biased target lateral distance may comprise an intentionally adjusted lateral distance that a vehicle may aim to maintain from a reference point, such as the center of a lane or another vehicle, during maneuvers such as lane changes. This adjustment may be made to improve the vehicle's stability, safety, and/or performance under varying driving conditions, etc. For example, during a lane change, the driving control system may bias the lateral distance to keep a safer gap from adjacent vehicles, considering factors such as the vehicle's speed, road conditions, and/or the presence of obstacles, etc.

One or more sensors (e.g., IMU sensors, camera, LIDAR, RADAR, blind spot monitoring sensor, line departure warning sensor, parking sensor, light sensor, rain sensor, traction control sensor, anti-lock braking system sensor, tire pressure monitoring sensor, seatbelt sensor, airbag sensor, fuel sensor, emission sensor, throttle position sensor, inverter, converter, motor controller, power distribution unit, high-voltage wiring and connectors, auxiliary power modules, charging interface, etc.) may also be controlled, for example, based on one or more features (e.g., evaluating the engagement state of the driver) described herein.

An operation control for autonomous driving (e.g., controlling an autonomous driving function) of the vehicle may include various driving control of the vehicle by the vehicle control device (e.g., acceleration, deceleration, steering control, gear shifting control, braking system control, traction control, stability control, cruise control, lane keeping assist control, collision avoidance system control, emergency brake assistance control, traffic sign recognition control, adaptive headlight control, driver warning control, autonomous driving operational design domain (ODD) control, etc.).

An autonomous driving level and/or autonomous driving activation/deactivation may also be controlled, for example, based on one or more features (e.g., evaluating the engagement state of the driver) described herein. A driving control apparatus may perform an autonomous driving level control (e.g., a change of an autonomous driving level, a change of a required user attentiveness, etc.) or cause deactivation of an autonomous driving operation. For example, by changing the required user attentiveness, the driver may be required to place his/her hands on the driving wheel more often (e.g., at least once in a threshold time period, such as five second, 30 seconds, 1 minute, etc.). By changing the required user attentiveness, the driver may be required to look ahead more often (e.g., at least once in a threshold time period, such as five second, 30 seconds, 1 minute, etc.). By changing the autonomous driving level, one or more video contents may not be displayed on a display of the vehicle.

In the various flowcharts of the present disclosure, one or more operations may be omitted or performed in any other order. At least some of the example embodiment(s) of the present disclosure may be performed at any particular or arbitrary point in each operation of the flowchart. Various flowcharts of the present disclosure may be performed by at least one of an autonomous driving control device (also referred to as a driving automation device or driving automation system), a processor 130, a control unit 100, an autonomous vehicle 10, or a computer program.

Hereinafter, one or more example embodiments will be described in detail with reference to the accompanying drawings, but identical or corresponding components are denoted by the same reference numerals regardless of figure numbers, and redundant descriptions thereof will be omitted.

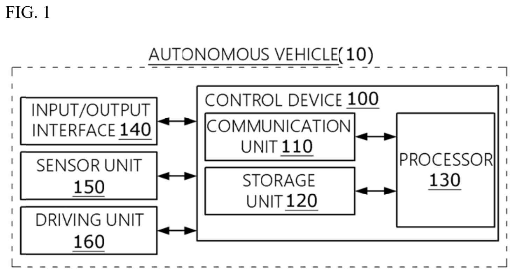

FIG. 1 is a configuration diagram of an example autonomous vehicle 10.

The vehicle 10 may include control device 100, a communication unit 110, a storage unit 120, a processor 130, an input/output interface (also referred to as a user interface or an input and output device) 140, a sensor unit (also referred to as a sensor or a sensor array) 150, and a driving unit 160. Each of these components of FIG. 1 may be implemented inside the vehicle.

The control device (100) of the autonomous vehicle (10) may be integrally formed with internal components of the autonomous vehicle (10), or may be implemented as a separate and independent device from other internal components of the autonomous vehicle (10), capable of communicating with internal components of the vehicle via various connection means (e.g., CAN bus, wireless network, wired connection, etc.). The autonomous driving control device (100) may control the vehicle by including the communication unit (110), the storage unit (120), and the processor (130), and may further perform complex control functions depending on driving situations by including additional components such as the input/output interface (140), the sensor unit (150), and the drive unit (160).

The communication unit (110) may perform communication with other control devices inside the vehicle to share data between systems, or transmit and receive various types of information through connections with external entities. The communication unit (110) may transmit control signals and data between internal components using various in-vehicle communication methods such as CAN communication and Ethernet, and may interwork driving information and external data in real time by communicating with a user terminal, other vehicles (V2V: Vehicle-to-Vehicle), infrastructure (V2I: Vehicle-to-Infrastructure), or an external server.

The communication unit (110) may perform functions including short-range communication, reception of GPS signals, V2X (Vehicle-to-Everything) communication, optical communication, broadcast transmission and reception, and ITS (Intelligent Transport Systems) communication. It may support stable short-range data transmission using wireless communication technologies such as Bluetooth, RFID (Radio Frequency Identification), IrDA (Infrared Data Association), UWB (Ultra Wideband), ZigBee, NFC (Near Field Communication), Wi-Fi, Wi-Fi Direct, and Wireless USB. In addition, the communication unit (110) may include a mobile communication module based on mobile communication networks (e.g., LTE, 5G) and a wireless internet module for wireless internet access, and may enhance the performance of the autonomous driving system by receiving real-time data through long-range communication and interworking with the cloud.

The storage unit (120) may include various types of memory capable of storing data, and may be integrated within the control device (100) or the processor (130), or configured as a separate module. The storage unit (120) may include non-volatile memory (e.g., hard disk drive, flash memory, EEPROM, SRAM, FRAM, PRAM, MRAM, etc.) and volatile memory (e.g., DRAM, SDRAM, DDR-SDRAM, etc.), and may implement a memory system with various capacities and performance levels by combining them.

The storage unit (120) may store braking and steering input data of the driver, and may provide data for setting a personalized override determination reference value of the driver.

For example, the storage unit (120) may accumulate (e.g., collect) data on braking deceleration and the rate of change of braking deceleration generated in response to a braking input (e.g., brake pedal) from the driver while the autonomous driving system is in control, and may provide data for learning the driver's braking tendency.

**In** addition, the storage unit (120) may accumulate steering torque input data and torque change rate data of the driver, and may provide data for learning and analyzing the individual steering tendency of the driver. The stored braking and steering input data of the driver may be analyzed by the processor (130), and a personalized override determination reference value may be generated based on the analysis.

The storage unit (120) may store instructions for executing the embodiment(s) of the present disclosure. When executed by the processor (130), these instructions may include learning driving data of the driver to set a personalized override determination reference value (also referred to as an autonomous driving override threshold value) of the driver, and performing an override determination for the driver during driving control by the autonomous driving system according to the set override determination reference value.

The processor (130) may communicate with the communication unit (110), the storage unit (120), the input/output interface (140), the sensor unit (150), the drive unit (160), and various internal components of the vehicle (10) via electrical or operational connections, and may control the operations of each component and perform data processing. The processor (130) may serve as a central processing unit for executing instructions and performing data computations, and may collect, process, and analyze data in real time according to the driving environment of the vehicle to perform vehicle control.

The processor (130) may be implemented in the form of hardware, software, or a combination thereof, and may, for example, execute vehicle control logic in the form of a microcontroller, FPGA, or ASIC. Additionally, for controlling complex autonomous driving and driver assistance systems, the processor may include a multi-processor configuration. Such processor configurations may support comprehensive vehicle control and stable performance by executing autonomous and assistance systems, processing sensor data, managing communication data, and performing driving-related decision functions.

The processor (130) may learn and generate a personalized override determination reference value of the driver based on driving data (e.g., driving history data) of the driver stored in the storage unit (120), and may determine whether an override input from the driver has occurred during autonomous driving using the generated override determination reference value.

In addition, the processor (130) may manage the ON/OFF state of the user-specific mode (USM) and process and apply the personalized settings received through the user interface.

The input/output interface (140) serves to receive inputs related to vehicle control from the user and to deliver information on the vehicle's control state and system operation to the user.

The input/output interface (140) may receive various types of input from the user and provide the user with the status of vehicle control. The input/output interface (140) may include input means and output means.

The input means may include physical buttons, selectable areas on a touch display, voice recognition functions, gesture recognition functions, and the like, through which the user may input commands such as requesting activation of the autonomous driving system, switching functions, or setting driving assistance features.

The output means may include a display, audio modules (e.g., speakers), and haptic modules, and may provide the user with information such as the status of the autonomous driving system, notifications for control transitions, and activation status of functions in visual, auditory, or tactile forms.

**In** addition, the input/output interface 140 may receive input from the driver through physical buttons such as a touchscreen or switch, a voice recognition system, and the like. Through this, the driver may transmit commands such as activation of an autonomous driving function, change of warning settings, and deactivation of warnings to the vehicle system.

The input/output interface 140 may provide a human-machine interface (HMI) that allows the driver to turn ON/OFF a mode for automatic setting of personalized override determination reference values, or to manually set the personalized override determination reference values.

In addition, the driver may select a longitudinal (braking) override reference (Early/In time/Later) and a lateral (steering) override reference (low/mid/high) through the user interface.

The sensor unit 150 may include a plurality of sensors that support the stable operation of the autonomous driving system or the driver assistance system by detecting various driving and environmental information in real time. The sensor unit 150 may measure distances and speeds of surrounding objects using long-range detection sensors such as RADAR (Radio Detection and Ranging) and LIDAR (Light Detection and Ranging), and may detect objects near the vehicle 10 using ultrasonic sensors

The sensor unit 150 may include a camera. The camera may be classified into an external camera and an internal camera. The external camera (e.g., a front-facing camera) may recognize roads, lanes, and surrounding environments, and the internal camera may detect the driver's condition (e.g., gaze tracking, steering wheel grip status) or the interior situation, thereby comprehensively understanding both internal and external conditions of the vehicle. The sensor unit 150 may also include a heart rate sensor, a pressure sensor, and an infrared sensor to collect biometric information of the driver or various environmental data.

The sensor unit 150 may acquire surrounding situation information for determining whether a braking input from the driver during autonomous driving corresponds to a response to an unexpected surrounding situation.

For example, a camera, radar, or LiDAR of the sensor unit 150 may detect in real time the presence of a vehicle that has suddenly cut in, a pedestrian, or an obstacle in front of the vehicle, and may generate surrounding situation data. Based on this surrounding situation data, the processor 130 may determine whether the sudden braking input from the driver corresponds to an event that should be excluded from general driving tendency learning data.

The driving unit 160 (e.g., drive train) may include various components that provide driving force required for traveling of the vehicle 10 and control the operation of the vehicle according to commands output from the control device 100. The driving unit 160 may be composed of devices that generate and transmit power of the vehicle, such as an engine, motor, transmission, and wheel driving system, as well as controllers for controlling them. Through these components, acceleration, deceleration, and directional change of the vehicle 10 may be performed.

The driving unit 160 is controlled to maintain driving stability by performing longitudinal control (acceleration and deceleration) and lateral control (lane keeping and changing) of the vehicle. For example, the driving unit 160 may adjust the output of the motor or control the rotational speed and direction of the wheels according to a command from the control device 100, so that the vehicle follows the driving path.

In addition, the driving unit 160 may include a braking system to reduce the speed of the vehicle or bring it to a stop while driving. In the case of an electric vehicle, the driving unit 160 may control the vehicle 10 through an electric motor, and in the case of an internal combustion engine vehicle, it may control the vehicle 10 based on engine output.

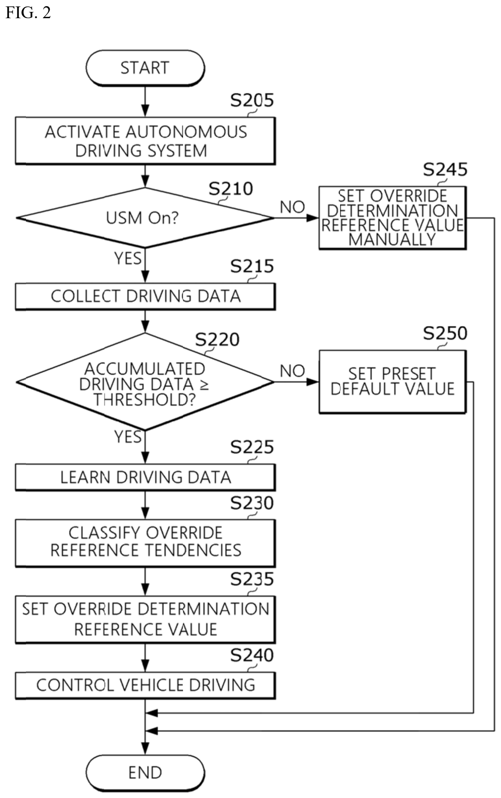

FIG. 2 is a flowchart illustrating an example process of personalized override learning and determination.

The processor 130 may activate the autonomous driving system (S205).

Specifically, the processor 130 may determine whether activation of the autonomous driving system is possible by receiving an activation request signal from the driver through the input/output interface 140, or by analyzing driving environment information detected from the sensor unit 150.

For example, when the driver requests activation of the autonomous driving system by pressing a button mounted on the steering wheel or through a touch display, the processor 130 may activate the autonomous driving system by analyzing vehicle speed, lane recognition status, and distance information to surrounding vehicles provided by the sensor unit 150.

Next, the processor 130 may determine whether a user-specific mode (USM) for personalized automatic setting is activated (S210).

The processor 130 may determine the activation status of the USM by receiving status information of the USM set by the driver via a human-machine interface (HMI) through the input/output interface 140, or by checking the activation status information of the USM that is pre-stored in the memory 120.

For example, the driver may select the USM to be turned ON or OFF through the HMI screen of the vehicle, and the processor 130 may perform a subsequent process based on the selected setting status.

When the USM is activated (ON) (S210: Yes), the processor 130 may collect driving data of the driver (S215).

The processor 130 may collect a braking value corresponding to a braking input of the driver through the sensor unit 150. Specifically, the processor 130 may collect deceleration amount data and deceleration rate data through the sensor unit 150, and may collect steering torque data and steering torque rate data corresponding to a steering input of the driver.

For example, when a braking input or a steering input of the driver is received while the autonomous driving system is activated, the processor 130 may identify the input data and store it in the memory 120. The braking input may be received through various braking means such as a brake pedal or an electronic parking brake, and the steering input may be received when the driver operates a steering wheel.

Next, the processor 130 may determine whether the driving data of the driver has been accumulated beyond a predetermined threshold (e.g., whether the amount of the collected driving data is above the predetermined threshold) (S220).

Specifically, the processor 130 may check whether the number of accumulations or the accumulation period of the braking input data and the steering input data of the driver, which are stored in the memory 120, is sufficient for learning to set a personalized override determination reference value. For example, the processor 130 may determine whether a preset threshold (e.g., accumulation of data exceeding N times) is satisfied, and decide whether to proceed with the subsequent learning step.

When the driving data of the driver has been accumulated beyond the predetermined threshold (S220: Yes), the processor 130 may learn (e.g., machine-learn) the driving data of the driver (S225).

Specifically, the processor 130 may analyze the driving data of the driver stored in the memory 120 using a machine learning algorithm. For example, the processor 130 may analyze longitudinal braking deceleration data and deceleration rate data, as well as lateral steering torque data and torque rate data of the driver, to identify the driver's individual braking tendency and steering tendency. In this case, the processor 130 may exclude outlier data that occurred in unexpected external situations, such as a sudden braking input, from the data to be used for learning.

Next, the processor 130 may classify an override tendency of the driver based on the learned driving data (S230).

Specifically, the processor 130 may classify a deceleration tendency as strong, medium, or weak based on braking input data of the driver, and may classify a steering tendency as strong, medium, or weak based on steering input data of the driver. For example, when the driver frequently performs braking with a high rate of deceleration change, the processor 130 may classify the deceleration tendency as a strong group, and when the driver frequently performs override inputs with low steering torque, the processor 130 may classify the steering tendency as a weak group.

Next, the processor 130 may set an override determination reference value of the driver based on the classified override tendency (S235).

Specifically, the processor 130 may set a lower override determination reference value for a driver with a strong braking tendency and a higher override determination reference value for a driver with a weak braking tendency.

The processor 130 may be configured to identify a braking input of the driver that exceeds a braking value set by the autonomous driving system, and to set the override determination reference value of the driver based on the identified braking input. In this case, the processor 130 may identify multiple braking inputs of the driver that exceed the braking value set by the system, and may set the average of the identified braking inputs as the override determination reference value.

In addition, the processor 130 may set the override determination reference value based on a low steering torque for a driver with a weak steering tendency, and based on a high steering torque for a driver with a strong steering tendency. The processor 130 may store the set personalized override determination reference value in the memory 120.

The processor 130 may be configured to identify a steering input of the driver that exceeds a steering value set by the autonomous driving system, and to set the override determination reference value of the driver based on the identified steering input. In this case, the processor 130 may identify multiple steering inputs of the driver that exceed the steering value set by the system, and may set the average of the identified steering inputs as the override determination reference value.

Next, the processor 130 may control the vehicle based on the set override determination reference value (S240).

Specifically, whenever the processor 130 receives a braking input or steering input from the driver during activation of the autonomous driving system, it may compare the input data, received from the sensor unit 150, with the set personalized override determination reference value in real time. If the comparison result shows that the driver's input exceeds the set override reference value, the processor 130 may determine it as an override input and transfer control of the vehicle to the driver. On the other hand, if the input does not exceed the reference value, the processor 130 may maintain the activation state of the autonomous driving system and continue controlling the vehicle.

The processor 130 may continue collecting and learning the driver's driving data, and may periodically update and optimize the personalized override determination reference value.

Meanwhile, when the USM is deactivated (OFF) (S220: No), the processor 130 may set an override determination reference value manually selected by the driver (S245).

Specifically, the processor 130 may receive a manual override reference value selection from the driver via a human-machine interface (HMI) through the input/output interface 140.

For example, the driver may select one of "Early," "In time," or "Later" for a longitudinal override determination timing, or select one of "Low," "Mid," or "High" for a lateral override determination torque level through the HMI. The processor 130 may store the driver's selection in the memory 120 and utilize it for override determination while the autonomous driving system is activated.

Meanwhile, when the driving data of the driver has been accumulated below a predetermined threshold (S220: No), the processor 130 may set a preset default override determination reference value of the driver (S250).

Specifically, during an initial stage in which a sufficient amount of driving data of the driver for setting a personalized override determination reference value has not been secured, the processor 130 may control the vehicle using a general and universal override determination reference value preset by the vehicle manufacturer. Thereafter, when the driving data of the driver has been sufficiently accumulated beyond the predetermined threshold, the processor 130 may replace the default value with a personalized override determination reference value corresponding to the driver's individual tendency and apply it.

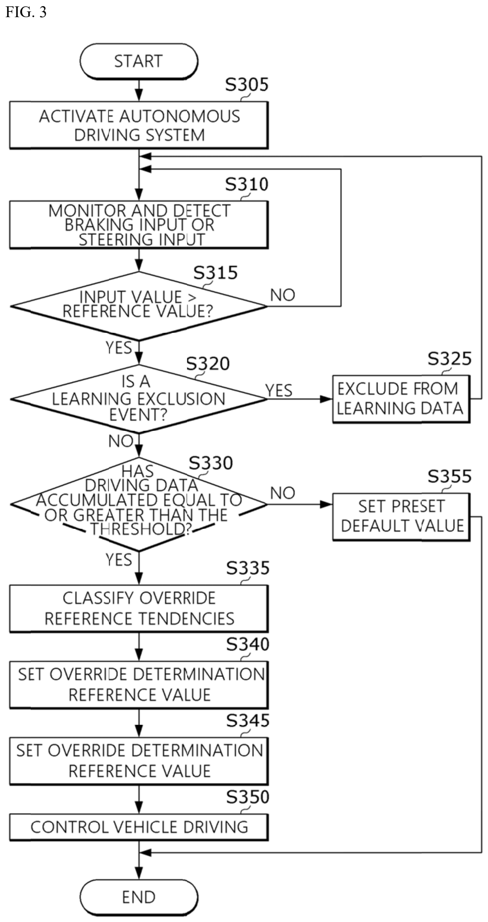

FIG. 3 is a flowchart illustrating an example process of override determination. Each step in FIG. 3 may be terminated when the autonomous driving system is deactivated, when the USM setting is deactivated (OFF), or when a termination input is received from the user.

The processor 130 may activate the autonomous driving system and the user-specific mode (USM) (S305). The detailed description of this step is the same as that of step S210 in FIG. 2 and will not be repeated here to avoid redundancy.

Next, the processor 130 may monitor and detect a braking input or a steering input of the driver (S310).

Specifically, the processor 130 may detect in real time, via the sensor unit 150, the braking input intensity of the driver and the corresponding vehicle deceleration data, and may monitor steering torque data corresponding to the steering input of the driver in real time. The braking input may be received from various braking devices such as a brake pedal or hand brake, and the steering input may be primarily received through the steering wheel.

For example, the processor 130 may compare a target deceleration or a reference steering torque value set by the autonomous driving system with an actual input value measured by the sensor unit 150 to determine whether it exceeds the preset value.

When the braking input or the steering input exceeds the value set by the autonomous driving system (S315: Yes), the processor 130 may determine whether the input corresponds to a learning exclusion event (S320).

Specifically, the processor 130 may analyze surrounding situation information of the vehicle acquired through a camera, radar, or LiDAR of the sensor unit 150 to determine whether the driver's sudden braking or steering input is a response to an unexpected situation in front of the vehicle (e.g., sudden stop of a forward vehicle, appearance of a pedestrian, obstacle, etc.).

In this case, the processor 130 may perform the determination based on a table of a database (DB) in which predefined conditional criteria for each situation are stored in the memory 120. For example, the processor 130 may classify unexpected situations by type, store threshold ranges of vehicle sensors corresponding to each type in a DB table of the memory 120, and determine whether the input corresponds to a learning exclusion event by comparing the surrounding environment information acquired in real time from the sensor unit 150 with the data in the DB table.

Additionally, the processor 130 may determine whether the driver's sudden braking or steering input corresponds to an unexpected situation response input based on a machine learning model that has been pre-trained with correlations between such inputs and surrounding environment information. For example, the processor 130 may train a machine learning model using a plurality of previously collected sudden braking or steering events and surrounding environment data, and may automatically classify whether the input corresponds to an unexpected situation response based on the input sensor data to determine whether it is a learning exclusion event.

The processor 130 may determine whether the input data corresponds to a learning exclusion event through either one of the DB table-based determination method or the machine learning algorithm-based analysis method, or a combination of both methods, and may exclude the corresponding data from the driving data used for learning the override determination reference value.

When the input corresponds to a learning exclusion event (S320: Yes), the processor 130 may exclude the input data from the learning data for the personalized override determination reference value (S325), and return to the step of monitoring the braking input or the steering input of the driver (S310) to continue detecting inputs.

When the input does not correspond to a learning exclusion event (S320: No), the processor 130 may determine whether the driving data of the driver has been accumulated beyond a predetermined threshold (S330). The detailed determination criteria and operational method are the same as those in step S220 of FIG. 2, and redundant descriptions will be omitted.

When the driving data of the driver has been accumulated beyond the predetermined threshold (S330: Yes), the processor 130 may learn the driving data of the driver using a machine learning algorithm (S335).

Next, the processor 130 may classify an override tendency of the driver based on the learned driving data (S340). The processor 130 may further classify the driver's braking tendency (e.g., strong, medium, weak) and steering tendency (e.g., strong, medium, weak) based on the learned data to accurately identify the driver's individual tendency.

Next, the processor 130 may set an override determination reference value of the driver based on the classified tendency (S345). In this case, the processor 130 may update or fine-tune the previously set reference value based on the most recently collected and analyzed data.

Next, the processor 130 may control the vehicle based on the set override determination reference value (S350).

The processor 130 may compare a real-time input of the driver (braking input or steering input) with the set personalized reference value, and if the input exceeds the reference value, it may determine the input as an intentional override by the driver and transfer control of the vehicle to the driver. Conversely, if the input value is below the reference value, the processor 130 may maintain the activation state of the autonomous driving system and continue controlling the vehicle.

Meanwhile, when the braking input or steering input does not exceed the value set by the autonomous driving system (S315: No), the processor 130 may determine that the input is not an override input by the driver and may maintain the control state of the autonomous driving system. In this case, the processor 130 may return to the step of monitoring the braking input or steering input of the driver (S310), or terminate the operation if a termination input is received from the user.

In contrast, when the driving data of the driver has been accumulated below a predetermined threshold (S330: No), the processor 130 may set the override determination reference value of the driver to a preset default value (S355).

In this case, as described in FIG. 2, the processor 130 may determine whether an input is an override based on the default value until a sufficient amount of the driver's driving data is accumulated, and thereafter may gradually update the reference value based on the additionally accumulated data.

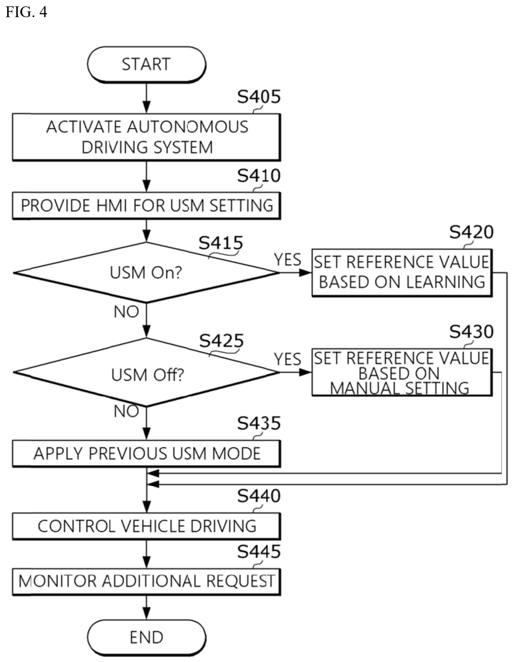

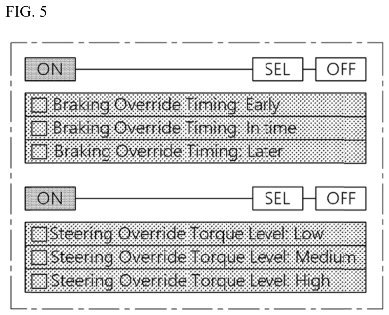

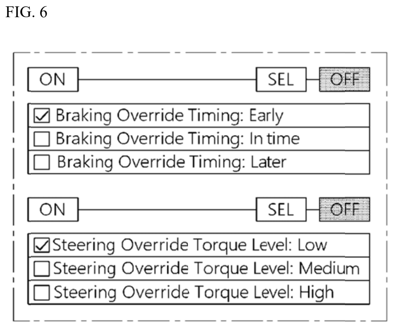

FIG. 4 is a flowchart illustrating an example process for a personalized automatic setting of a user-specific mode (USM). For the description of FIG. 4, reference is made to FIGS. 5 and 6. FIG. 5 is an example of a human-machine interface (HMI) screen when the personalized automatic mode (e.g., USM) is activated (ON), and FIG. 6 is an example of an HMI screen when the personalized automatic mode (e.g., USM) is deactivated (OFF).

The processor 130 may activate the autonomous driving system (S405), and may provide a human-machine interface (HMI) for setting the personalized automatic mode (e.g., USM) (S410).

Specifically, the processor 130 may display a USM setting screen to the user through a touch display screen in the vehicle or other input means via the input/output interface 140.

For example, the processor 130 may display, on the screen, selectable options for turning the USM ON (activated) or OFF (deactivated), so that the driver may choose whether to activate automatic learning of personalized override determination reference values in the autonomous driving system.

The processor 130 may determine whether an ON request for USM activation is received from the driver via the human-machine interface (HMI) (S415).

When a USM activation (ON) request is received (S415: Yes), the processor 130 may activate the personalized automatic setting (USM) mode and set a determination reference value based on automatic learning (S420). In this case, the processor 130 may continuously collect braking input and steering input data of the driver from the sensor unit 150 and store it in the memory 120, and may automatically learn and update a personalized override determination reference value based on the collected data.

For example, referring to FIG. 5, a human-machine interface (HMI) screen is shown for a case in which the personalized automatic mode (USM) is activated (ON).

When the USM setting is activated (ON), the processor 130 may disable manual selection options on the user interface in order to prevent the driver from directly selecting the override determination reference. For example, as shown in FIG. 5, when the personalized automatic mode is fully activated (ON), the checkboxes for manually selecting the braking override determination timing (Early, In time, Later) and the steering override determination torque level (Low, Medium, High) are displayed in gray to indicate a deactivated state. The processor 130 may inform the driver that a personalized override determination reference value learned automatically is being applied through such a user interface.

Meanwhile, when a USM activation (ON) request is not received (S415: No), the processor 130 may determine whether a USM deactivation (OFF) request is received (S425).

When a USM deactivation (OFF) request is received (S425: Yes), the processor 130 may deactivate the personalized automatic setting (USM) mode and apply the determination reference value based on a manual setting (S430). In this case, the processor 130 may store the deactivated state of the personalized automatic setting mode in the memory 120, and may not automatically learn or update the personalized override determination reference value.

In this case, the processor 130 may provide a human-machine interface (HMI) that allows the driver to manually set the override determination reference value in the deactivated USM state. The processor 130 may display a selection menu on the display, via the input/output interface 140, allowing the driver to select options for longitudinal braking override determination timing (Early, In time, Later) and lateral steering override determination torque level (Low, Mid, High, etc.).

For example, FIG. 6 illustrates a human-machine interface (HMI) screen when the personalized automatic mode (USM) is deactivated (OFF). When the USM setting is in the deactivated (OFF) state, the processor 130 may provide a user interface that allows the driver to manually select personalized override determination reference values.

For example, in FIG. 6, when both the personalized automatic mode for the driver and the personalized automatic mode for suspension of driver steering intervention are deactivated (OFF), the checkboxes for braking override determination timing (Early, In time, Later) and steering override determination torque level (Low, Medium, High) are activated. The processor 130 may allow the driver to directly select a preferred override determination reference through the activated checkboxes, and may store the selected reference in the memory 120 for application during vehicle control. Although not illustrated, in FIG. 6, either the personalized automatic mode for the driver or the personalized automatic mode for suspension of driver steering intervention may be independently deactivated (OFF), and in such a case, only the corresponding checkbox may be activated.

Meanwhile, when neither a USM activation (ON) request nor a USM deactivation (OFF) request is received (S425: No), the processor 130 may maintain and apply the existing USM setting state currently stored in the memory 120 (S435).

Specifically, when the driver closes the setting screen without making a separate selection through the human-machine interface (HMI), or when a certain time elapses, the processor 130 may automatically retrieve and apply the previously stored USM activation or deactivation state from the memory 120. If no previously set USM state exists, the processor 130 may apply a preset default setting state (e.g., OFF state) to control the autonomous driving system.

Next, the processor 130 may control driving of the autonomous vehicle 10 based on the override determination reference value set through step S420, S430, or S435 (S440).

The processor 130 may determine a driver's override during driving based on an override determination reference value directly set by the driver or automatically learned and stored in the memory 120 when evaluating the driver's input while the autonomous driving system is activated.

Thereafter, the processor 130 may continuously monitor whether there is an additional USM setting request or a manual setting request from the driver during driving of the vehicle (S445). If an additional USM setting change request is received, the processor 130 may return to a previous step to update the setting state, and if an additional manual reference value change request is received, the processor 130 may perform the manual setting step (S430) again to update the reference value.

Through the example embodiments described herein, it may be possible to more accurately determine whether a driver's intentional intervention has occurred while the autonomous driving system is activated, and to prevent unnecessary deactivation of the autonomous driving system by reflecting the driver's individual override characteristics.

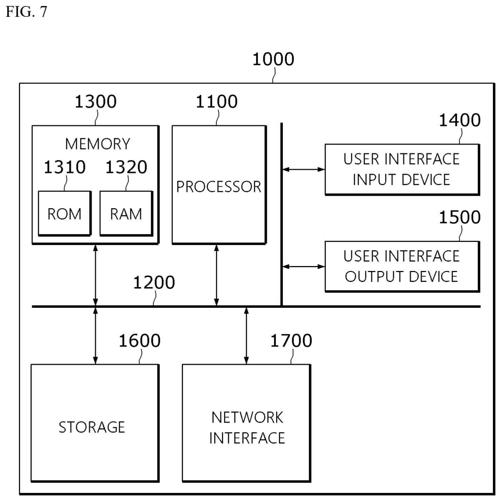

FIG. 7 shows an example computing system (e.g., a computing device of a vehicle or any other apparatus). One or more controllers, processors, etc. described herein may be implemented by the computing system or may be implemented in the computing system. For example, one or more of the autonomous vehicle 10, the control device 100, the communication unit 110, the storage unit 120, the processor 130, the input/output interface 140, the sensor unit 150, the driving unit 160, etc. may be implemented with a computing system 1000 as shown in FIG. 7.

The computing system (also referred to as a computer, a computing device, etc.) 1000 may include at least one processor 1100, memory 1300, a user interface input device 1400, a user interface output device 1500, a storage 1600, and a network interface 1700, which are connected with each other via a bus 1200.

The processor 1100 may be a central processing unit (CPU) or a semiconductor device that processes instructions stored in the memory 1300 and/or the storage 1600. Each of the memory 1300 and the storage 1600 may include various types of volatile or nonvolatile storage media. For example, the memory 1300 may include a read-only memory (ROM) and a random access memory (RAM).

Communication interface(s) (also referred to as communication device(s), communicator(s), communication module(s), communication unit(s), etc.), such as the network interface 1700, may allow software and/or data to be transferred between a device and one or more external devices, and/or between one or more components of a device. Communication interface(s) may include a receiver, a transmitter, a transceiver, a modem, a network interface and/or adapter (such as an Ethernet adapter), a radio transceiver, an antenna, a communication port, a Personal Computer Memory Card International Association (PCMCIA) slot and card, or the like. Software and data transferred via communication interface(s) may be in the form of signals, which may be electronic, electromagnetic, optical, infrared, or other signals capable of being received by communication interface(s). These signals may be provided to communication interface(s) via a communication path of a device, which may be implemented using, for example, wire or cable, fiber optics, a cellular link, a radio frequency (RF) link and/or other communications channels. Communication interface(s) may communicate using one or more communication protocols, such as Ethernet, Wi-Fi, near-field communication (NFC), Infrared Data Association (IrDA), Bluetooth, Bluetooth low energy (BLE), Zigbee, Long-Term Evolution (LTE), 5G New Radio (NR), vehicle-to-everything (V2X), a controller area network (CAN), or a local interconnect network (LIN), etc.

Accordingly, the operations of the method or algorithm described in connection with example embodiment(s) disclosed in the specification may be directly implemented with a hardware module, a software module, or a combination of the hardware module and the software module, which is executed by the processor 1100. The software module may reside on a storage medium (i.e., the memory 1300 and/or the storage 1600) such as RAM, a flash memory, ROM, an erasable and programmable read-only memory (EPROM), an electrically erasable and programmable read-only memory (EEPROM), a register, a hard disk drive, a removable disc, or a compact disc read-only memory (CD-ROM).

The storage medium may be coupled to the processor 1100. The processor 1100 may read out information from the storage medium and may write information in the storage medium. Alternatively, the storage medium may be integrated with the processor 1100. The processor and storage medium may be implemented with an application specific integrated circuit (ASIC). The ASIC may be provided in a user terminal. Alternatively, the processor and storage medium may be implemented with separate components in the user terminal.

The term "module" or "unit" used in the specification means a software and/or hardware component, and the "module" or "unit" performs certain operations/functions/roles. However, the "module" or "unit" is not construed as being limited to software or hardware. The "module" or "unit" may be configured to be in an addressable storage medium or to execute one or more processors. Therefore, as an example, the "module" or "unit" may include at least one of components such as software components, object-oriented software components, class components, and task components, processes, functions, attributes, procedures, sub-routines, segments of program codes, drivers, firmware, micro-codes, circuits, data, databases, data structures, tables, arrays, or variables. Functions provided in the components, "modules", or "units" may be combined into a smaller number of components, "modules", or "units" or further divided into additional components, "modules", or "units".

In the present disclosure, the "module" or "unit" may be realized as a processor and a memory. The "processor" should be widely construed to include a general-purpose processor, a central processing unit (CPU), a microprocessor, a digital signal processor (DSP), a microcontroller, a state machine, or the like. In some environments, the "processor" may refer to an application-specific integrated circuit (ASIC), a programmable logic device (PLD), or a field-programmable gate array (FPGA), and the like. For example, the "processor" may refer to a combination of processing devices such as a combination of a DSP and a microprocessor, a combination of a plurality of microprocessors, a combination of one or more microprocessors combined with a DSP core, or any other such combination. Moreover, the "memory" should be widely construed to include any electronic component capable of storing electronic information. The "memory" may refer to various types of processor-readable medium such as a random access memory (RAM), a read only memory (ROM), a non-volatile random access memory (NVRAM), a programmable read only memory (PROM), an erasable programmable read only memory (EPROM), an electrically erasable programmable read only memory (EEPROM), a flash memory, a magnetic or optical data storage device, and registers. When the processor can read information from a memory and/or record the information in the memory, the memory may be in a state of electronic communication with a processor. Memory integrated into a processor is in a state of electronic communication with the processor.

The one or more features described herein may be provided as a computer program stored in a computer-readable recording medium in order to be executed on a computer. The medium may either continuously store a computer-executable program or temporarily store the program for execution or download. Furthermore, the medium may be a variety of recording or storage means in the form of a single hardware device or multiple combined hardware devices, and is not limited to media directly connected to some computer system but may also be distributed across a network. Examples of such media include magnetic media such as a hard disk, a floppy disk, or a magnetic tape, optical recording media such as a CD-ROM or a DVD, magneto-optical media such as a floptical disk, and a ROM, RAM, or flash memory, among others, configured to store program instructions. Additional examples of such media include media or storage media that are managed by an app store that distributes applications or by various other sites or servers that provide or distribute software.

In a hardware implementation, processing units used for performing the techniques may be implemented within one or more ASICs, DSPs, digital signal processing devices, programmable logic devices, field-programmable gate arrays, processors, controllers, microcontrollers, microprocessors, electronic devices, or computers or combinations thereof designed to perform the functions described in the present disclosure.

An autonomous vehicle may comprise: a memory; and a processor electrically or operatively connected to the memory, wherein the processor is configured to: set an override determination reference value of the driver by learning driving data of the driver; and during driving control by an autonomous driving system, perform an override determination for the driver according to the set override determination reference value.

The processor may be configured to provide a user interface through an input/output interface, the user interface being capable of turning on or off a user-specific mode (USM) for personalized automatic setting of override; and automatically set the override determination reference value for the driver by learning the driving data of the driver when the USM is turned on.

The processor may be configured to provide a user interface through an input/output interface, the user interface being capable of turning on or off a user-specific mode (USM) for personalized automatic setting of override; and receive a manual setting of the override determination reference value through the user interface when the USM is turned off.

The processor may be configured to classify an override tendency of the driver by learning the driving data of the driver; and set the override determination reference value of the driver based on the classified override tendency.

The processor may be configured to set the override determination reference value of the driver to a preset default value when the driving data of the driver is accumulated below a predetermined threshold; and automatically update the override determination reference value based on the driving data of the driver accumulated after the default value is set.

The processor may be configured to include a braking input of the driver in driving data for learning, when the braking input of the driver exceeds a braking value set by the autonomous driving system.

The processor may be configured to identify the braking input of the driver that exceeds the braking value set by the autonomous driving system; and set the override determination reference value of the driver based on the identified braking input.

The processor may be configured to determine whether a braking input of the driver is a learning exclusion event based on at least one of a braking input intensity of the driver and surrounding situation information acquired from a sensor unit of the autonomous vehicle; and exclude the braking input determined as the learning exclusion event from data for learning.

The processor may be configured to include a steering input of the driver in driving data for learning, when the steering input of the driver exceeds a steering value set by the autonomous driving system.

The processor may be configured to identify the steering input of the driver that exceeds the steering value set by the autonomous driving system; and set the override determination reference value of the driver based on the identified steering input.

A method performed by an autonomous vehicle may comprise: setting an override determination reference value of a driver by learning driving data of the driver; and during driving control by an autonomous driving system, performing an override determination for the driver according to the set override determination reference value.

The method may further comprise: providing a user interface through an input/output interface, the user interface being capable of turning on or off a user-specific mode (USM) for personalized automatic setting of override; and automatically setting the override determination reference value for the driver by learning the driving data of the driver when the USM is turned on.

The method may further comprise: providing a user interface through an input/output interface, the user interface being capable of turning on or off a user-specific mode (USM) for personalized automatic setting of override; and receiving a manual setting of the override determination reference value through the user interface when the USM is turned off.

The method may further comprise: classifying an override tendency of the driver by learning the driving data of the driver; and setting the override determination reference value of the driver based on the classified override tendency.

The method may further comprise: setting the override determination reference value of the driver to a preset default value when the driving data of the driver is accumulated below a predetermined threshold; and automatically updating the override determination reference value based on the driving data of the driver accumulated after the default value is set.

The method may further comprise: including a braking input of the driver in driving data for learning, when the braking input of the driver exceeds a braking value set by the autonomous driving system.

The method may further comprise: identifying the braking input of the driver that exceeds the braking value set by the autonomous driving system; and setting the override determination reference value of the driver based on the identified braking input.

The method may further comprise: determining whether a braking input of the driver is a learning exclusion event based on at least one of a braking input intensity of the driver and surrounding situation information acquired from a sensor unit of the autonomous vehicle; and excluding the braking input determined as the learning exclusion event from data for learning.

The method may further comprise: including a steering input of the driver in driving data for learning, when the steering input of the driver exceeds a steering value set by the autonomous driving system.

The method may further comprise: identifying the steering input of the driver that exceeds the steering value set by the autonomous driving system; and setting the override determination reference value of the driver based on the identified steering input.

By learning an individual driver's braking and steering input data to automatically or manually set a personalized override determination reference value, an autonomous driving system can flexibly reflect the individual driver's characteristics to determine an override and continuously perform vehicle control.

The effects of the present disclosure are not limited to those mentioned above, and other effects not mentioned will be clearly understood by those skilled in the art from the following description.

While example embodiment(s) of the present disclosure have been described above with reference to the accompanying drawings, those skilled in the art will understand that various modifications and changes can be made to the present disclosure without departing from the spirit and scope of the disclosure as defined in the appended claims.

## Claims

1. An autonomous vehicle comprising:
a processor; and
a memory storing at least one instruction that is configured, when executed by the processor communicating with the memory, to cause the autonomous vehicle to:
determine, based on driving data of a driver of the autonomous vehicle, an autonomous driving override threshold value for the driver, wherein the driving data is processed through a learning process associated with autonomous overriding operations performed by the driver; and
during driving control by an autonomous driving system of the autonomous vehicle, disengage, based on a value indicating a degree of driver intervention associated with the driver and the autonomous driving override threshold value, the autonomous driving system of the autonomous vehicle.

2. The autonomous vehicle of claim 1, wherein the at least one instruction is configured, when executed by the processor communicating with the memory, to cause the autonomous vehicle to determine the autonomous driving override threshold value by:
outputting, via an input and output device of the autonomous vehicle, a user interface for turning on or off a user-specific mode (USM) for personalizing the autonomous driving override threshold value; and
performing, based on the USM being turned on, the learning process by inputting accumulated driving data associated with the driver as input to a machine-learning model;
automatically adjusting, based on the USM being turned on and the learning process, the autonomous driving override threshold value for the driver.

3. The autonomous vehicle of claim 1 or 2, wherein the at least one instruction is configured, when executed by the processor communicating with the memory, to cause the autonomous vehicle to determine the autonomous driving override threshold value by:
outputting, via an input and output device of the autonomous vehicle, a user interface for turning on or off a user-specific mode (USM) for personalizing the autonomous driving override threshold value; and
receiving, based on the USM being turned off and via the user interface, a manual setting of the autonomous driving override threshold value.

4. The autonomous vehicle of anyone of claims 1-3, wherein the at least one instruction is configured, when executed by the processor communicating with the memory, to cause the autonomous vehicle to determine the autonomous driving override threshold value by:
classifying, based on the learning process, an override tendency of the driver; and
determine the autonomous driving override threshold value of the driver further based on the classified override tendency.

5. The autonomous vehicle of claim 4, wherein the at least one instruction is configured, when executed by the processor communicating with the memory, to cause the autonomous vehicle to determine the autonomous driving override threshold value by:
setting, at a first time when an amount of the driving data of the driver is below a predetermined threshold, the autonomous driving override threshold value of the driver to a preset default value; and
automatically updating, at a second time after the first time, the autonomous driving override threshold value based on the driving data, wherein the driving data comprises accumulated driving data accumulated after setting the preset default value.

6. The autonomous vehicle of anyone of claims 1-5, wherein the at least one instruction is configured, when executed by the processor communicating with the memory, to further cause the autonomous vehicle to:
include, based on a braking input of the driver exceeding a threshold braking value, the braking input of the driver in the learning process for processing the driving data of the driver, wherein the threshold braking value is set by the autonomous driving system, wherein, optionally, the at least one instruction is configured, when executed by the processor communicating with the memory, to further cause the autonomous vehicle to:
identify the braking input of the driver that exceeds the threshold braking value; and
determine the autonomous driving override threshold value of the driver based on the identified braking input.

7. The autonomous vehicle of anyone of claims 1-6, wherein the at least one instruction is configured, when executed by the processor communicating with the memory, to further cause the autonomous vehicle to:
exclude, based on at least one of an intensity of a braking input of the driver or surrounding situation information acquired via a sensor of the autonomous vehicle, the braking input of the driver from the learning process.

8. The autonomous vehicle of anyone of claims 1-7, wherein the at least one instruction is configured, when executed by the processor communicating with the memory, to further cause the autonomous vehicle to:
include, based on a steering input of the driver exceeding a threshold steering value, the steering input in the learning process for processing the driving data of the driver, wherein, optionally, the at least one instruction is configured, when executed by the processor communicating with the memory, to further cause the autonomous vehicle to:
identify the steering input of the driver that exceeds the threshold steering value, wherein the threshold steering value is set by the autonomous driving system; and
determine the autonomous driving override threshold value of the driver based on the identified steering input.

9. A method performed by a device of an autonomous vehicle, the method comprising:
determining, based on driving data of a driver of the autonomous vehicle, an autonomous driving override threshold value for the driver, wherein the driving data is processed through a learning process associated with autonomous overriding operations performed by the driver; and
during driving control by an autonomous driving system of the autonomous vehicle, disengaging, based on a value indicating a degree of driver intervention associated with the driver and the autonomous driving override threshold value, the autonomous driving system of the autonomous vehicle.

10. The method of claim 9, wherein the determining of the autonomous driving override threshold value comprises:
outputting, via an input and output device of the autonomous vehicle, a user interface for turning on or off a user-specific mode (USM) for personalizing the autonomous driving override threshold value;
performing, based on the USM being turned on, the learning process by inputting accumulated driving data associated with the driver as input to a machine-learning model; and
automatically adjusting, based on the USM being turned on and based on the learning process, the autonomous driving override threshold value for the driver.

11. The method of claim 9 or 10, wherein the determining of the autonomous driving override threshold value comprises:
outputting, via an input and output device of the autonomous vehicle, a user interface for turning on or off a user-specific mode (USM) for personalizing the autonomous driving override threshold value; and
receiving, based on the USM being turned off and via the user interface, a manual setting of the autonomous driving override threshold value.

12. The method of anyone of claims 9-11, wherein the determining of the autonomous driving override threshold value comprises:
classifying, based on the learning process, an override tendency of the driver by machine-learning the driving data of the driver; and
determining the autonomous driving override threshold value of the driver further based on the classified override tendency, wherein, optionally, the determining of the autonomous driving override threshold value comprises:
setting, at a first time when an amount of the driving data of the driver is below a predetermined threshold, the autonomous driving override threshold value of the driver to a preset default value; and
automatically updating, at a second time after the first time, the autonomous driving override threshold value based on the driving data, wherein the driving data comprises accumulated driving data accumulated after setting the preset default value.

13. The method of anyone of claims 9-12, further comprising:
including, based on a braking input of the driver exceeding a threshold braking value, the braking input of the driver in the learning process for processing the driving data of the driver, wherein the threshold braking value is set by the autonomous driving system, wherein, optionally, the method further comprises:
identifying the braking input of the driver that exceeds the threshold braking value; and
determining the autonomous driving override threshold value of the driver based on the identified braking input.

14. The method of anyone of claims 9-13, further comprising:
excluding, based on at least one of an intensity of a braking input of the driver or surrounding situation information acquired via a sensor of the autonomous vehicle, the braking input of the driver from the learning process.

15. The method of anyone of claims 9-14, further comprising: including a, based on a steering input of the driver exceeding a threshold steering value, the steering input in the learning process for processing the driving data of the driver, wherein, optionally, the method further comprises:
identifying the steering input of the driver that exceeds the threshold steering value, wherein the threshold steering value is set by the autonomous driving system; and
determining the autonomous driving override threshold value of the driver based on the identified steering input.

## Amended claims

### Amended claims in accordance with Rule 137(2) EPC.

1. An autonomous vehicle (10) comprising:
a processor (130); and
a memory (120) storing at least one instruction that is configured, when executed by the processor (130) communicating with the memory (120), to cause the autonomous vehicle (10) to:
determine, based on driving data of a driver of the autonomous vehicle (10), an autonomous driving override threshold value for the driver, wherein the driving data is processed through a learning process associated with autonomous overriding operations performed by the driver; and
during driving control by an autonomous driving system of the autonomous vehicle (10), disengage, based on a value indicating a degree of driver intervention associated with the driver and the autonomous driving override threshold value, the autonomous driving system of the autonomous vehicle (10).

2. The autonomous vehicle (10) of claim 1, wherein the at least one instruction is configured, when executed by the processor (130) communicating with the memory (120), to cause the autonomous vehicle (10) to determine the autonomous driving override threshold value by:
outputting, via an input and output device (140) of the autonomous vehicle (10), a user interface for turning on or off a user-specific mode, USM, for personalizing the autonomous driving override threshold value; and
performing, based on the USM being turned on, the learning process by inputting accumulated driving data associated with the driver as input to a machine-learning model;
automatically adjusting, based on the USM being turned on and the learning process, the autonomous driving override threshold value for the driver.

3. The autonomous vehicle (10) of claim 1 or 2, wherein the at least one instruction is configured, when executed by the processor (130) communicating with the memory (120), to cause the autonomous vehicle (10) to determine the autonomous driving override threshold value by:
outputting, via an input and output device (140) of the autonomous vehicle, a user interface for turning on or off a user-specific mode, USM, for personalizing the autonomous driving override threshold value; and
receiving, based on the USM being turned off and via the user interface, a manual setting of the autonomous driving override threshold value.

4. The autonomous vehicle (10) of anyone of claims 1-3, wherein the at least one instruction is configured, when executed by the processor (130) communicating with the memory (120), to cause the autonomous vehicle (10) to determine the autonomous driving override threshold value by:
classifying, based on the learning process, an override tendency of the driver; and
determine the autonomous driving override threshold value of the driver further based on the classified override tendency.

5. The autonomous vehicle (10) of claim 4, wherein the at least one instruction is configured, when executed by the processor (130) communicating with the memory (120), to cause the autonomous vehicle (10) to determine the autonomous driving override threshold value by:
setting, at a first time when an amount of the driving data of the driver is below a predetermined threshold, the autonomous driving override threshold value of the driver to a preset default value; and
automatically updating, at a second time after the first time, the autonomous driving override threshold value based on the driving data, wherein the driving data comprises accumulated driving data accumulated after setting the preset default value.

6. The autonomous vehicle (10) of anyone of claims 1-5, wherein the at least one instruction is configured, when executed by the processor (130) communicating with the memory (120), to further cause the autonomous vehicle (10) to:
include, based on a braking input of the driver exceeding a threshold braking value, the braking input of the driver in the learning process for processing the driving data of the driver, wherein the threshold braking value is set by the autonomous driving system, wherein, optionally, the at least one instruction is configured, when executed by the processor (130) communicating with the memory (120), to further cause the autonomous vehicle (10) to:
identify the braking input of the driver that exceeds the threshold braking value; and
determine the autonomous driving override threshold value of the driver based on the identified braking input.

7. The autonomous vehicle (10) of anyone of claims 1-6, wherein the at least one instruction is configured, when executed by the processor (130) communicating with the memory (120), to further cause the autonomous vehicle (10) to:
exclude, based on at least one of an intensity of a braking input of the driver or surrounding situation information acquired via a sensor (150) of the autonomous vehicle (10), the braking input of the driver from the learning process.

8. The autonomous vehicle of anyone of claims 1-7, wherein the at least one instruction is configured, when executed by the processor (130) communicating with the memory (120), to further cause the autonomous vehicle (10) to:
include, based on a steering input of the driver exceeding a threshold steering value, the steering input in the learning process for processing the driving data of the driver, wherein, optionally, the at least one instruction is configured, when executed by the processor (130) communicating with the memory (120), to further cause the autonomous vehicle (10) to:
identify the steering input of the driver that exceeds the threshold steering value, wherein the threshold steering value is set by the autonomous driving system; and
determine the autonomous driving override threshold value of the driver based on the identified steering input.

9. A method performed by a device (100) of an autonomous vehicle (10), the method comprising:
determining, based on driving data of a driver of the autonomous vehicle (10), an autonomous driving override threshold value for the driver, wherein the driving data is processed through a learning process associated with autonomous overriding operations performed by the driver; and
during driving control by an autonomous driving system of the autonomous vehicle (10), disengaging, based on a value indicating a degree of driver intervention associated with the driver and the autonomous driving override threshold value, the autonomous driving system of the autonomous vehicle (10).

10. The method of claim 9, wherein the determining of the autonomous driving override threshold value comprises:
outputting, via an input and output device (140) of the autonomous vehicle (10), a user interface for turning on or off a user-specific mode, USM, for personalizing the autonomous driving override threshold value;
performing, based on the USM being turned on, the learning process by inputting accumulated driving data associated with the driver as input to a machine-learning model; and
automatically adjusting, based on the USM being turned on and based on the learning process, the autonomous driving override threshold value for the driver.

11. The method of claim 9 or 10, wherein the determining of the autonomous driving override threshold value comprises:
outputting, via an input and output device (140) of the autonomous vehicle (10), a user interface for turning on or off a user-specific mode, USM, for personalizing the autonomous driving override threshold value; and
receiving, based on the USM being turned off and via the user interface, a manual setting of the autonomous driving override threshold value.

12. The method of anyone of claims 9-11, wherein the determining of the autonomous driving override threshold value comprises:
classifying, based on the learning process, an override tendency of the driver by machine-learning the driving data of the driver; and
determining the autonomous driving override threshold value of the driver further based on the classified override tendency, wherein, optionally, the determining of the autonomous driving override threshold value comprises:
setting, at a first time when an amount of the driving data of the driver is below a predetermined threshold, the autonomous driving override threshold value of the driver to a preset default value; and
automatically updating, at a second time after the first time, the autonomous driving override threshold value based on the driving data, wherein the driving data comprises accumulated driving data accumulated after setting the preset default value.

13. The method of anyone of claims 9-12, further comprising:
including, based on a braking input of the driver exceeding a threshold braking value, the braking input of the driver in the learning process for processing the driving data of the driver, wherein the threshold braking value is set by the autonomous driving system, wherein, optionally, the method further comprises:
identifying the braking input of the driver that exceeds the threshold braking value; and
determining the autonomous driving override threshold value of the driver based on the identified braking input.

14. The method of anyone of claims 9-13, further comprising:
excluding, based on at least one of an intensity of a braking input of the driver or surrounding situation information acquired via a sensor (150) of the autonomous vehicle (10), the braking input of the driver from the learning process.

15. The method of anyone of claims 9-14, further comprising:
including a, based on a steering input of the driver exceeding a threshold steering value, the steering input in the learning process for processing the driving data of the driver, wherein, optionally, the method further comprises:
identifying the steering input of the driver that exceeds the threshold steering value, wherein the threshold steering value is set by the autonomous driving system; and
determining the autonomous driving override threshold value of the driver based on the identified steering input.
